# EUROPEAN PATENT SPECIFICATION

(11) **EP 1 253 345 B1**
(45) Date of publication and mention of the grant of the patent: **18.06.2008**
(21) Application number: 02007583.4
(22) Date of filing: 03.04.2002
(51) Int. Cl.: F16F 9/32, F16F 9/36, F15B 15/14

(54) **Piston**
Kolben
Piston

(30) Priority: 25.04.2001 JP 2001128488
(43) Date of publication of application: 30.10.2002
(73) Proprietor: Yamaha Hatsudoki Kabushiki Kaisha, Iwata-shi, Shizuoka-ken (JP)
(72) Inventor: Seiji, Sawai, Iwata-Shi, Shizuoka-ken (JP)
(74) Representative: Grünecker, Kinkeldey, Stockmair & Schwanhäusser Anwaltssozietät

(56) References cited:
- FR-A- 2 068 325
- US-A- 3 418 001
- US-A- 4 109 921
- US-A- 5 118 119
- PATENT ABSTRACTS OF JAPAN vol. 2000, no. 20, 10 July 2001 (2001-07-10) & JP 2001 059537 A (TAIHO KOGYO CO LTD), 6 March 2001 (2001-03-06)

## Description

This invention relates to a piston for inserting into a cylinder, in particular into a cylinder of a hydraulic damping means, with a piston body having an annular groove at its outside surface, and an elastic seal ring fitted into said groove, and to a damping means, in particular a hydraulic damping means, with a piston inserted into a cylinder bore of a cylinder tube for free sliding and for dividing said cylinder bore into first and second chambers, wherein said piston comprises a piston body having an annular groove at its outside surface, and an elastic seal ring fitted into said groove.

One of conventional automobiles is disclosed in a Japanese Unexamined Patent Publication No. Sho 55-5114.

According to the above publication, automobiles are provided with damping systems for restricting rolling and pitching of the vehicle body by damping impact forces coming from the road surface through the wheels to the vehicle body while the vehicle is running on the road. Such a damping system comprises paired right and left hydraulic dampers installed between the vehicle body and members on the wheel side, and a hydraulic cylinder that interconnects the dampers.

The cylinder is provided with a cylinder tube supported on the vehicle body, and a piston inserted for free sliding within the bore in the cylinder tube and for dividing the cylinder bore into first and second chambers. The piston comprises a piston body with its outside cylindrical surface formed with an annular groove centered on its axis and an elastic seal ring fitted into the groove as centered on the axis. Here, the inside circumferential surface of the seal ring is in pressing contact with the bottom surface of the groove while its outside circumferential surface is in pressing contact with the inside cylindrical surface of the cylinder bore, so that the area between the first and second chambers is sealed up. The cylinder is made to be in communication with respective dampers through hydraulic pipes.

When each damper performs extension and contraction motions as the wheel moves up and down while the vehicle runs over a road surface, the piston in the cylinder slides in interlocked motion in its axial direction to restrict the extension and contraction motions. In this way the vehicle body is restricted from rolling and pitching.

Here, the work of assembling the cylinder includes the step of fitting the seal ring into the groove formed in the piston body. First, the seal ring is radially expanded so that its (inside) diameter increases by its elastic deformation, and fitted over one end, with respect to the axial direction, of the piston body. Next, the seal ring is slid along the outside cylindrical surface of the piston body in the axial direction, so that the seal ring falls and fits into the groove. Thus, the seal ring contracts by its own elasticity to its original shape in the groove, the (inside) diameter of the seal ring decreases and the inside diameter surface comes into pressing contact with the groove bottom surface. Thus, the seal ring fitting step is completed.

The diametral dimension of the groove bottom is designed so that the bottom and the inside circumferential surface of the seal ring are in pressing contact with each other, and the depth of the groove is designed to be enough for containing the seal ring. As a result, the piston body is made with an outside diameter that is considerably greater than the inside diameter of the seal ring.

Therefore, partial plastic deformation might occur in part of the seal ring when the seal ring is elastically expanded to fit over the one end of the piston body before fitting the seal ring into the groove.

If the plastic deformation occurs, the first problem is that, when the seal ring is fitted into the groove, it cannot return fully to its original shape by its own elasticity only, the press-contact force of the internal surface of the seal ring against the groove bottom surface becomes insufficient, and the sealing effect with the seal ring might be lowered.

The second problem is that, after the seal ring contracts toward its original shape in the groove, its outside diameter is too great and, when the piston is to be inserted into the cylinder bore in the cylinder tube, the inserting work becomes hard as the outer edge of the seal ring is caught with the edge at the opening of the cylinder bore.

An annular seal for pistons and piston rods of cylinder-type actuators is known from US 4,109,921. This annular seal consists of first and second sealing rings accommodated in one annular groove with a tapering bottom such that a radial height of the first sealing ring varies along an axis of the piston. Further, the second sealing ring is completely enclosed ii the annular groove and supplies dry lubricant to the sliding surface.

A high pressure seal effective between pistons and cylinders comprising a Teflon-ring provided in an annular groove and being pushed outwards of the groove by means of a back-up member is known from US 3,418,001.

A further sealing arrangement with two sealing rings provided adjacent to each other in one annular groove in a piston is known from FR 2 068 325.

This invention is made in view of the above situation with an objective to improve a piston as mentioned above so as to facilitate the cylinder assembly work by making it easy to insert the seal ring into the groove on the piston body and to insert the piston into the cylinder bore.

It is a further objective of the present invention to improve a damping means as mentioned above so as to facilitate the work of assembling the piston to the cylinder of the damping means.

According to the invention, the objective is solved by a piston for inserting into a cylinder having the feature combination of claim 1.

Here, it is an advantage to prevent an overexpanding of the seal ring and thus, to maintain a good sealing effect with the seal ring.

Preferred embodiments are laid down in the dependent claims.

In the following, the present invention is explained in greater detail with respect to several embodiments thereof in conjunction with the accompanying drawings, wherein:
- FIG. 1: is an enlarged cross-sectional view of the portion encircled with a phantom line in FIG. 2;
- FIG. 2: is a schematic, overall cross-sectional view of a damping system; and
- FIG. 3: shows the process of fitting the seal ring into the groove.

The above vehicle is also provided with a hydraulic damping system 3 to restrict the vehicle body 1 from pitching or rolling by damping shocks that tend to be transmitted from the road surface through the wheels to the vehicle body 1 while the vehicle is running.

The damping system 3 includes hydraulic dampers 4, 4 provided respectively in the suspensions 2, 2 and a hydraulic cylinder 6 which makes hydraulic communication with the dampers 4, 4 through hydraulic tubes 5, 5. Each damper 4 is interposed between the vehicle body 1 and a wheel-side-located member 7.

The cylinder 6 includes a cylinder tube 10 supported on the vehicle body 1, and a piston 13 inserted for free sliding in the direction of its axis 12 in the cylinder bore 11 formed in the cylinder tube 10. The cylinder bore 11 is divided into the first and second chambers 14 and 15 by the piston 13. Here, the axis 12 extends to be nearly vertical.

The cylinder 6 also includes another piston 17 inserted for free sliding in the first chamber 14 in its axial direction. The another piston 17 is fixed to the piston 13 to slide together as a single body. The first chamber 14 is divided into two chambers 18, 19 with the another piston 17. Of the two chambers, one chamber 18 is made to communicate with the hydraulic chamber of one damper 4 through the hydraulic tube 5 while the other chamber 19 to that of the other damper 4 through the other hydraulic tube 5. The another piston 17 is provided with a narrow passage 20 for intercommunicating both chambers 18, 19.

The hydraulic chamber of each damper 4 and the first chamber 14 of the cylinder 6 are filled with a fluid 21 or an oil 21 a. The second chamber 15 of the cylinder 6 is filled with a fluid 21 or a gas 21 b (nitrogen gas). A spring 22 is provided in the second chamber 15 to urge the piston 13 toward the first chamber 14.

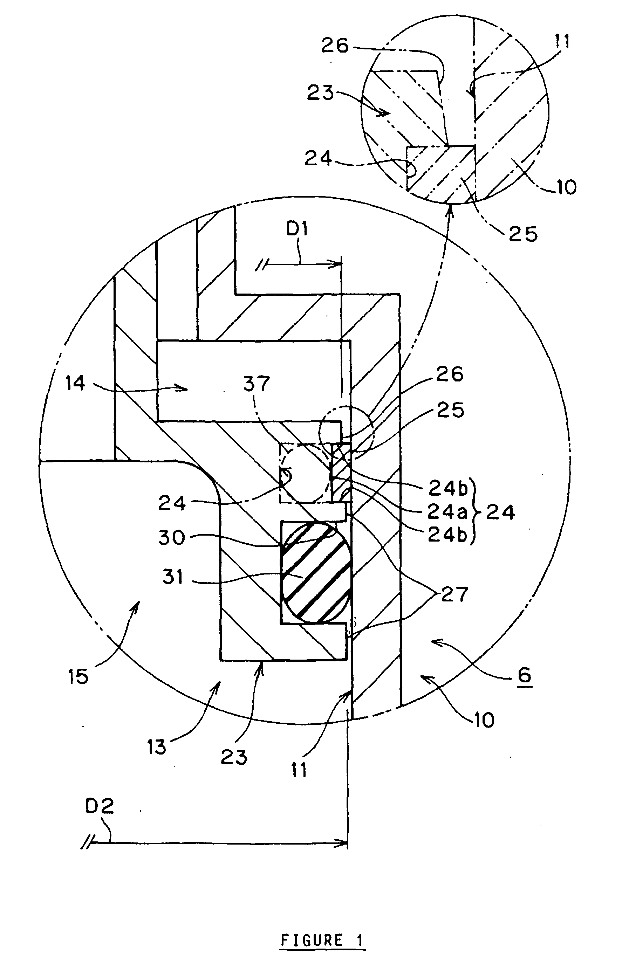

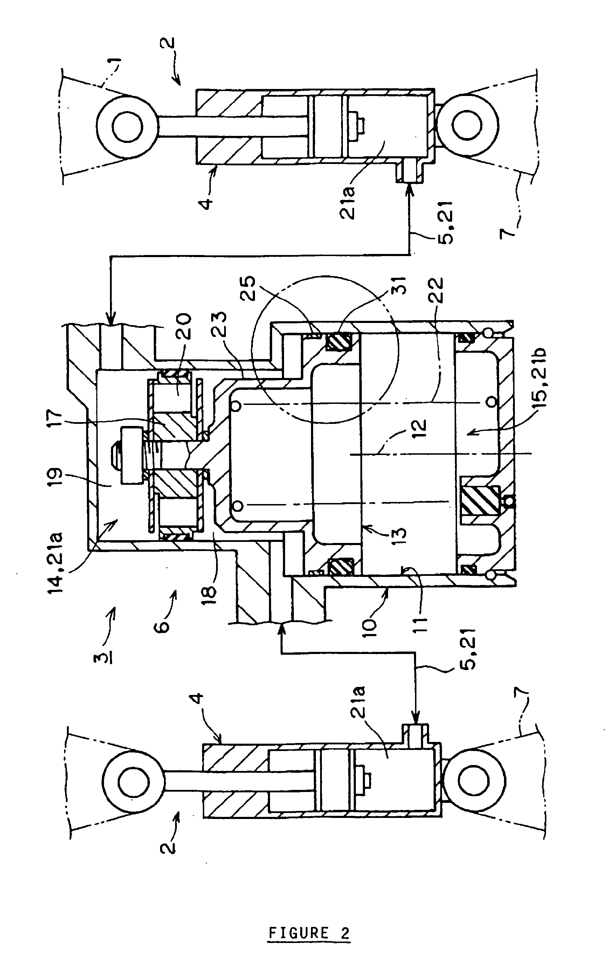

As shown in FIGs. 1 and 2, the piston 13 includes a piston body 23 located on the axis 12. The outside surface of the piston body 23 is formed with an annular groove 24 about the axis 12. A seal ring 25 made of an elastic material (Teflon, in trade name) is fitted into the groove 24 about the axis 12, and mounted to the piston body 13. Here, it is arranged that the seal ring 25 is in pressing contact with the bottom surface 24a of the groove 24 and surfaces 24b, 24b of the groove 24 opposing each other in the axial direction. The seal ring 25 is in a state slightly elongated elastically in its longitudinal direction.

Of the outside surface of the piston body 23, one part located on one (upper) side of the groove 24 in the axial direction is assumed to be the first outside cylindrical surface 26 while the other part (on the other, lower side) to be the second outside cylindrical surface 27.

The second outside cylindrical surface 27 is formed with another annular groove 30 about the axis 12. An elastic O-ring 31 made of rubber is fitted into the another groove 30 about the axis 12, so as to be attached to the piston 13.

The outer circumferential surfaces of the seal ring 25 and the O-ring 31 are made to come into pressing contact with the inside circumferential surface of the cylinder bore 11 to seal up the part between the first chamber 14 and the second chamber 15. The seal ring 25 is made higher (harder) in the modulus of elasticity than the rubber-made O-ring 31. Accordingly, the piston 13 moves in swift response to the change in the pressure of the fluid 21 present on the first chamber 14 side.

In case the hydraulic chamber of one of the two dampers 4, 4 is extended and the hydraulic chamber of the other damper 4 is contracted due to impact forces given from the road surface to the wheels, rapid change in the difference between lengths of the dampers 4 is prevented from occurring as the oil 21a passes through the narrow passage 20, so that the vehicle body 1 is restricted from rolling. In case both of the dampers 4, 4 are made to contract simultaneously due to the impact forces, the piston 13 moves toward the second chamber 15 side against the pressure of the gas 21b in the second chamber 15, so that the impact forces are damped and the vehicle body 1 is restricted from pitching.

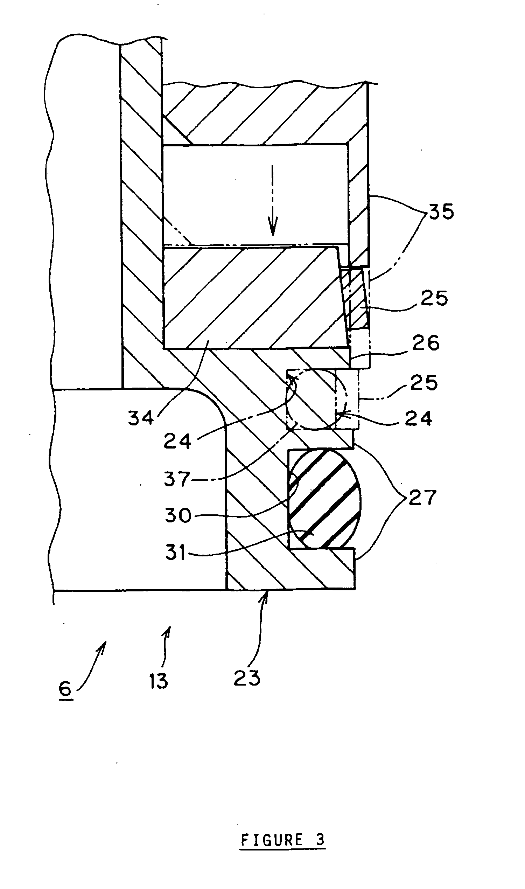

During the work of assembling the cylinder 6, first as shown in FIG. 3, in preparation for fitting the seal ring 25 into the groove 24 of the piston body 23, a truncated cone-shaped jig 34 is placed coaxially with the axis 12, with its larger diameter side being on one axial direction end face of the piston body 23. Next, the seal ring 25 is fitted over the smaller diameter side of the jig 34 (shown with solid lines in FIG. 3), moved toward the larger diameter side of the jig 34 using a press motion member 35, and farther moved toward the groove 24. Then the seal ring 25 easily falls and fits into the groove 24 (shown with phantom lines in FIG. 3).

In FIG. 1, the outside diameter D1 of the first outside cylindrical surface 26 is made smaller than that D2 of the second outside cylindrical surface 27.

Therefore, the work of fitting the seal ring 25 into the groove 24 of the piston body 23 as a step of the work of assembling the cylinder 6 may be done as follows: First, the seal ring 25 is deformed elastically to increase its inside diameter, fitted over the first outside cylindrical surface 26, out of the outside cylindrical surface, of the piston body 23, and fitted into the groove 24.

In this way, the seal ring 25 is passed over the first outside cylindrical surface 26 of the smaller diameter D1 to fit into the groove 24. That is, the insertion work is facilitated as the amount of expanding the inside diameter of the seal ring 25 is reduced according to the smaller dimension of the outside diameter D1.

Also according to the reduction in the amount of expanding the inside diameter of the seal ring 25 as described above, plastic deformation of the seal ring 25 is restricted from occurring.

First, therefore, when the seal ring 25 is fitted into the groove 24, the seal ring 25 returns to its original shape by its own elasticity, comes into contact with the bottom surface 24a of the groove 24 with a sufficient force, and the sealing effect with the seal ring 25 is maintained satisfactorily.

Second, the outside diameter of the seal ring 25 after returning to its original shape in the groove 24 is prevented from increasing excessively. Therefore, the outside circumferential edge of the seal ring 25 is prevented from being caught with the opening edge of the cylinder bore 11 when the piston 13 is inserted into the cylinder bore 11 of the cylinder tube 10. As a result, the work of fitting the piston 13 into the cylinder bore 11 is facilitated.

In the above arrangement, the length of the first outside cylindrical surface 26 in the axial direction is set shorter than that of the second outside cylindrical surface 27.

Therefore, the distance of sliding the seal ring 25 over the outside cylindrical surface of the piston body 23 from its one end toward the groove 24 may be shortened when inserting the seal ring 25, to further facilitate the insertion work.

As shown with phantom lines in FIG. 1, it may be alternatively arranged that the outside diameter D1 of the first outside cylindrical surface 26 is made to be a maximum on the groove 24 side and to decrease gradually toward the end away from the groove 24 in the axial direction of the piston body 23 (toward the first chamber 14).

With the above arrangement, as the first step of fitting the seal ring 25 over the first outside cylindrical surface 26, first the seal ring 25 has only to be fitted around the small diameter portion of the first outside cylindrical surface 26, so that the work is made easy.

The work of inserting the seal ring 25 into the groove 24 is made easier accordingly.

As described before, since the piston 13 is urged by the spring 22 toward the first chamber 14, the maximum hydraulic pressure of the fluid 21 produced in the first chamber 14 is greater than that in the second chamber 15. Here, the first chamber 14 is located on the side of the first outside cylindrical surface 26 in the axial direction of the piston 13 while the second chamber 15 is located on the side of the second outside cylindrical surface 27.

The seal ring 25 fitted into the groove 24 is pressed with high pressure fluid 21 from the side of the first chamber 14 toward the second chamber 15 and pressed against the one 24b, on the second chamber 15 side, of the axially opposing surfaces 24b, 24b with a greater force.

However, as described above, the outside diameter D1 of the first outside cylindrical surface 26 is made smaller than the outside diameter D2 of the second outside cylindrical surface 27, and accordingly the area of the opposing surface 24b on the second chamber 15 side is held unchanged at a larger value.

Therefore, the seal ring 25 is pressed with the high pressure of the fluid 21 on the first chamber 14 side against the opposing surface 24b on the second chamber 15 side. However, since the area of this opposing surface 24b is greater, pressure per unit area onto the opposing surface 24b is accordingly held low, which is advantageous for the service life of the seal ring 25.

As shown with a dash-and-dotted line in FIGs. 1 and 3, another elastic seal ring 37 is placed between the bottom surface 24a of the groove 24 and the seal ring 25 about the axis 12, so that the another seal ring 37 urges the seal ring 25 radially outward.

Therefore, when the another seal ring 37 is made of a material such as rubber which is lower in modulus of elasticity than the material of the seal ring 25, it is possible to increase the amount of deformation of the another seal ring 37, so that it can be fitted easily into the groove 24. Even when the seal ring 25 is made of a material of a relatively great modulus of elasticity such as Teflon (trade name), the inside diameter of the seal ring 25 may be increased because of the presence of the another seal ring 37, so that the seal ring 25 may be fitted into the groove 24 more easily without causing plastic deformation of the seal ring 25.

Therefore, both of the seal rings 25 and 37 can be fitted easily into the groove 24 and the sealing effect with the seal rings 25 and 37 is held unchanged in favorable state.

Incidentally in the example shown above in the drawings, the spring 22, the another groove 30, and the O-ring 31 may be omitted.

This invention provides effects as described below.

There is shown a constitution of a piston in a cylinder comprising a cylinder tube and the piston inserted for free sliding in the axial direction into the cylinder bore in the cylinder tube and for dividing the cylinder bore into first and second chambers, with the piston comprising a piston body with its outside cylindrical surface having an annular groove centered on its axis and an elastic seal ring fitted as centered on the above axis into the groove.

In the above cylinder, one part of the outside cylindrical surface of the piston body that is located on one side in the axial direction of the groove is regarded as the first outside cylindrical surface and the other part of the outside cylindrical surface located on the other side of the groove is regarded as the second outside cylindrical surface, and the outside diameter of the first outside cylindrical surface is made smaller than that of the second outside cylindrical surface.

Therefore, in case the seal ring is to be fitted into the groove as a step of assembling the cylinder, first the seal ring is elastically deformed to increase its inside diameter, fitted over the first outside cylindrical surface, out of the outside cylindrical surface, of the piston body, and fitted into the groove.

In this way, the seal ring is passed over the first outside cylindrical surface having a smaller diameter and fitted into the groove. According to the smaller diameter, the amount of expanding the inside diameter of the seal ring can remain small, so that the seal ring can be fitted easily.

As described above, the plastic deformation in the seal ring is restricted from occurring according to the extent of reduction in the amount of expanding the inside diameter of the seal ring.

Therefore, first, when the seal ring is fitted into the groove, the seal ring returns to its original shape by its own elasticity to contact well the groove bottom surface and keeps the sealing effect with the seal ring in favorable state.

Second, the outside diameter of the seal ring, after it has returned to its original shape by contraction, is prevented from becoming too great. As a result, when the piston is inserted into the cylinder bore in the cylinder tube, the outer circumferential part of the seal ring is prevented from being caught with the opening edge of the cylinder bore. This facilitates the work of inserting the piston into the cylinder bore.

As a preferred embodiment, the outside diameter of the first outside cylindrical surface is gradually decreased from the groove side toward the end in the axial direction of the piston body.

Therefore, when the seal ring is to be fitted over the first outside cylindrical surface as the first step of fitting in the seal ring, the seal ring is to be fitted over the smaller diameter portion of the first outside cylindrical surface, so that the work of fitting in the seal ring can be done easily.

Accordingly, the work of fitting the seal ring into the groove may be done easily.

As another preferred embodiment, the maximum hydraulic pressure of fluid produced in the first chamber is greater than that produced in the second chamber, and the first chamber is located on the side of the first outside cylindrical surface in the axial direction of the piston while the second chamber is located on the side of the second outside cylindrical surface.

Here, the seal ring fitted into the groove is pressed toward the second chamber with the pressure of the higher pressure fluid from the first chamber side, and so the seal ring tends to be pressed with a larger force against the opposing surface located on the second chamber side, out of axially opposing surfaces of the groove.

As described above, however, the outside diameter of the first outside cylindrical surface is made smaller than that of the second outside cylindrical surface, and accordingly the area of the opposing surface on the first chamber side is held unchanged to be greater than the area of the opposing surface on the second chamber side.

Therefore, the seal ring tends to contact the opposing surface located on the second chamber side with a greater force. However, as this opposing surface area is greater, the pressure per unit area of the opposing surface is held accordingly smaller, which is advantageous for the service life of the seal ring.

As a further preferred embodiment, the seal ring is urged radially outward with another seal ring interposed, as centered on the axis, between the bottom surface of the groove and the seal ring.

Therefore, when the another seal ring is made of a material such as rubber which is lower in modulus of elasticity than the material of the seal ring, it is possible to increase the amount of deformation of the another seal ring, so that it can be fitted easily into the groove. Even when the seal ring is made of a material of a relatively great modulus of elasticity such as Teflon (trade name), the inside diameter of the seal ring may be increased because of the presence of the another seal ring, so that the seal ring may be fitted into the groove more easily without causing plastic deformation of the seal ring.

Therefore, both of the seal rings can be fitted easily and the sealing effect with the seal rings is held unchanged in favorable state.

## Claims

1. A piston for inserting into a cylinder (6), in particular into a cylinder (6) of a hydraulic damping means (3), with a piston body (23) having an annular groove (24) at its outside surface (26,27), and an elastic seal ring (25) fitted into said groove (24),
wherein said outside surface (26,27) of said piston body (23) comprises two different outside diameters (D1,D2) on respective sides of said annular groove (24),
wherein the outside diameter (D1) of the outside cylindrical surface of the piston body that is located on one side in the axial direction of the groove (24) is made smaller than the outside diameter (D2) of the outside cylindrical surface located on the other side of the groove (24),
wherein said piston body (23)comprises a second groove (30) provided adjacent to said annular groove (24) and on a side of said annular groove (24) with said greater outside diameter (D2) of said two different outside diameters (D1 ,D2), **CHARACTERIZED IN THAT** an elastic O-ring (31) is fitted into said second groove (30),
wherein the seal ring (25) is made harder in the modulus of elasticity than the O-ring (31),
and wherein said elastic seal ring (25) is urged radially outward through another seal ring (37) interposed between a bottom surface (24a) of said annular groove (24) and said elastic seal ring (25).

2. A piston according to claim 1, **characterized in that** said outside diameter (D1) of said outside surface (26) located on an outer side of said piston body (23) is gradually decreased from a groove side toward an end in an axial direction of said piston body (23).

3. A piston according to claim 1 or 2, **characterized in that** said outside surface (27,27) of said piston body (23) comprises two equal outside diameters (D2) on respective sides of said second groove (30), in which the elastic O-ring (31) is fitted into.

4. A piston according to at least one of the preceding claims 1 to 3, **characterized in that** said different rings (25,31,37) are made of different materials.

5. A piston according to at least one of the preceding claims 1 to 4, **characterized in that** the seal ring (25) is a Teflon ring, the O-ring (31) is rubber-made, and the another seal ring (37) is made of a material such as rubber, which is lower in modulus of elasticity than the material of the seal ring (25).

6. A piston according to at least one of the preceding claims 1 to 5, **characterized in that** the seal ring (25) has a rectangular cross section, the O-ring (31) has a circular cross section, and the another seal ring (37) has a circular cross section.

7. A piston according to at least one of the preceding claims 1 to 6, **characterized in that** a length of the outside cylindrical surface (26) on the first chamber side in the axial direction of the piston is set shorter than a length of the outside cylindrical surface (27) on the second chamber side.

8. A damping means, in particular a hydraulic damping means, with a piston (13) according to one of the claims 1 to 6, inserted into a cylinder bore (11) of a cylinder tube (10) for free sliding and for dividing said cylinder bore (11) into first and second chambers (14,15), wherein said piston (13) comprises a piston body (23) having an annular groove (24) at its outside surface (26,27), and an elastic seal ring (25) fitted into said groove (24), wherein said outside surface (26,27) of said piston body (23) comprises two different outside diameters (D1,D2) on respective sides of said groove (24).

9. A damping means according to claim 8, **characterized in that** a maximum pressure of fluid produced in said first chamber (14) is greater than that produced in said second chamber (15), and said first chamber (14) is located on a side of said outside diameter (D1) with a smaller value.

10. A damping means according to claim 8 or 9, **characterized in that** another piston (17) is provided, which divides the first chamber (14) into two chambers (18,19), which are made to communicate with dampers (4,4) of different suspensions (2,2).

11. A damping means according to one of the claims 8 to 10, **characterized in that** said first chamber (14) is filled with a fluid (21) or an oil (21a), and said second chamber (15) is filled with a fluid (21) or a gas (21 b).

## Patentansprüche

1. Kolben zum Einsetzen in einen Zylinder (6), insbesondere in einen Zylinder (6) einer hydraulischen Dämpfungseinrichtung (3), mit einem Kolbenkörper (23), der ein ringförmige Nut (24) an seiner Außenoberfläche (26, 27) hat, und ein elastischer Dichtungsring (25) in die Nut (24) eingesetzt ist,
wobei die Außenoberfläche (26, 27) des Kolbenkörpers (23) zwei unterschiedliche Außendurchmesser (D1, D2) auf den jeweiligen Seiten der ringförmigen Nut (24) aufweist,
wobei der Außendurchmesser (D1) der äußeren zylindrischen Oberfläche des Kolbenkörpers, der auf einer Seite der axialen Richtung der Nut (24) angeordnet ist, kleiner gemacht ist als der Außendurchmesser (D2) der äußeren zylindrischen Oberfläche, der auf der anderen Seite der Nut (24) angeordnet ist,
wobei der Kolbenkörper (23) eine zweite Nut aufweist, vorgesehen benachbart zu der ringförmigen Nut (24) und auf einer Seite der ringförmigen Nut (24) mit einem größeren Außendurchmesser (D2) der zwei unterschiedlichen Außendurchmesser (D1, D2), **dadurch gekennzeichnet, dass**
ein elastischer O- Ring (31) in die zweite Nut (30) eingesetzt ist,
wobei der Dichtungsring (25) im Elastizitätsmodul härter als der O- Ring (31) gemacht ist,
und wobei der elastische Dichtungsring (25) durch einen weiteren Dichtungsring (37), eingesetzt zwischen eine Bodenoberfläche (24a) der ringförmigen Nut (24) und den elastischen Dichtungsring (25), radial nach außen gedrückt wird.

2. Kolben nach Anspruch 1, **dadurch gekennzeichnet, dass** der Außendurchmesser (D1) der Außenoberfläche (26), angeordnet auf einer Außenseite des Kolbenkörpers (23), allmählich von einer Seite der Nut in die Richtung zu einem Ende in einer axialen Richtung des Kolbenkörpers (23) vermindert wird.

3. Kolben nach Anspruch 1 oder 2, **dadurch gekennzeichnet, dass** die Außenoberfläche (27, 27) des Kolbenkörpers (23) zwei gleiche Außendurchmesser (D2) auf den jeweiligen Seiten der zweiten Nut (30) aufweist, in die der elastische O- Ring (31) eingesetzt ist.

4. Kolben nach zumindest einem der vorhergehenden Ansprüche 1 bis 3, **dadurch gekennzeichnet, dass** die unterschiedlichen Ringe (25, 31, 37) aus unterschiedlichen Materialien hergestellt sind.

5. Kolben nach zumindest einem der vorhergehenden Ansprüche 1 bis 4, **dadurch gekennzeichnet, dass** der Dichtungsring (25) ein Teflonring ist, der O- Ring (31) aus Gummi und ein weiterer Dichtungsring (37) aus einem Material, wie z. B. Gummi hergestellt ist, das im Elastizitätsmodul niedriger als das Material des Dichtungsrings (25) ist.

6. Kolben nach zumindest einem der vorhergehenden Ansprüche 1 bis 5, **dadurch gekennzeichnet, dass** der Dichtungsring (25) einen rechtwinkligen Querschnitt, der O- Ring (31) einen kreisförmigen Querschnitt und der weitere Dichtungsring (37) einen kreisförmigen Querschnitt hat.

7. Kolben nach zumindest einem der vorhergehenden Ansprüche 1 bis 6, **dadurch gekennzeichnet, dass** eine Länge der äußeren zylindrischen Oberfläche (26) auf der Seite der ersten Kammer in der axialen Richtung des Kolbens kürzer als eine Länge der äußeren zylindrischen Oberfläche (27) auf der Seite der zweiten Kammer festgelegt ist.

8. Dämpfungseinrichtung, insbesondere eine hydraulische Dämpfungseinrichtung, mit einem Kolben (13) nach einem der Ansprüche 1 bis 6, eingesetzt in eine Zylinderbohrung (11) eines Zylinderrohres (10), um frei zu gleiten und um die Zylinderbohrung (11) in erste und zweite Kammern (14, 15) zu teilen, wobei der Kolben (13) aufweist einen Kolbenkörper (23) mit einer ringförmigen Nut (24) an seiner Außenoberfläche (26, 27) und einen elastischen Dichtungsring (25), eingesetzt in die Nut (24), wobei die Außenoberfläche (26, 27) des Kolbenkörpers (23) zwei verschiedene Außendurchmesser (D1, D2) auf den jeweiligen Seiten der Nut (24) aufweist.

9. Dämpfungseinrichtung nach Anspruch 8, **dadurch gekennzeichnet, dass** ein maximaler Druck des Fluids, erzeugt in der ersten Kammer (14), größer ist als der in der zweiten Kammer erzeugte ist, und die erste Kammer (14) auf einer Seite des Außendurchmessers (D1) mit einem kleineren Wert angeordnet ist.

10. Dämpfungseinrichtung nach Anspruch 8 oder 9, **dadurch gekennzeichnet, dass** ein weiterer Kolben (17) vorgesehen ist, der die erste Kammer (14) in zwei Kammern (18, 19) teilt, die veranlasst sind, mit den Dämpfern (4, 4) der verschiedenen Aufhängungen (2, 2) zu kommunizieren.

11. Dämpfungseinrichtung nach einem der Ansprüche 8 bis 10, **dadurch gekennzeichnet, dass** die erste Kammer (14) mit einem Fluid (21) oder einem Öl (21 a) gefüllt ist, und die zweite Kammer (15) mit einem Fluid (21) oder einem Gas (21 b) gefüllt ist.

## Revendications

1. Piston destiné à être introduit à l'intérieur d'un cylindre (6), en particulier à l'intérieur d'un cylindre (6) de moyens d'amortissement hydraulique (3), comprenant un corps de piston (23) comportant une gorge annulaire (24) située sur sa surface extérieure (26, 27), et une bague d'étanchéité élastique (25) montée à l'intérieur de ladite gorge (24),
dans lequel ladite surface extérieure (26, 27) dudit corps de piston (23) comprend deux diamètres extérieurs différents (D1, D2) sur des côtés respectifs de ladite gorge annulaire (24),
dans lequel le diamètre extérieur (D1) de la surface cylindrique extérieure du corps de piston qui est située sur un côté dans la direction axiale de la gorge (24) est plus petit que le diamètre extérieur (D2) de la surface cylindrique extérieure située sur l'autre côté de la gorge (24),
dans lequel ledit corps de piston (23) comprend une seconde gorge (30) aménagée de manière adjacente à ladite gorge annulaire (24) et sur un côté de ladite gorge annulaire (24) qui a ledit diamètre extérieur plus grand (D2) desdits deux diamètres extérieurs différents (D1, D2),
**caractérisé en ce que** :
un joint torique élastique (31) est monté à l'intérieur de ladite seconde gorge (30),
dans lequel la bague d'étanchéité (25) a un module d'élasticité plus élevé que celui du joint torique (31),
et dans lequel ladite bague d'étanchéité élastique (25) est poussée vers l'extérieur dans la direction radiale au travers d'une autre bague d'étanchéité (37) disposée entre une surface de fond (24a) de ladite gorge annulaire (24) et ladite bague d'étanchéité élastique (25).

2. Piston selon la revendication 1, **caractérisé en ce que** ledit diamètre extérieur (D1) de ladite surface extérieure (26) située sur un côté extérieur dudit corps de piston (23) diminue progressivement à partir d'un côté de gorge vers une extrémité dans une direction axiale dudit corps de piston (23).

3. Piston selon la revendication 1 ou la revendication 2, **caractérisé en ce que** ladite surface extérieure (27, 27) dudit corps de piston (23) comprend deux diamètres extérieurs égaux (D2) sur des côtés respectifs de ladite seconde gorge (30) dans laquelle est monté le joint torique élastique (31).

4. Piston selon au moins l'une des revendications précédentes 1 à 3, **caractérisé en ce que** lesdites différentes bagues d'étanchéité (25, 31, 37) sont fabriquées dans des matériaux différents.

5. Piston selon au moins l'une des revendications précédentes 1 à 4, **caractérisé en ce que** la bague d'étanchéité (25) est une bague en Teflon, le joint torique (31) est fabriqué dans du caoutchouc, et l'autre bague d'étanchéité (37) est fabriquée dans un matériau comme du caoutchouc dont le module d'élasticité est inférieur à celui du matériau de la bague d'étanchéité (25).

6. Piston selon au moins l'une des revendications précédentes 1 à 5, **caractérisé en ce que** ka bague d'étanchéité (25) a une coupe transversale de forme rectangulaire, le joint torique (31) a une coupe transversale de forme circulaire, et l'autre bague d'étanchéité (37) a une coupe transversale de forme circulaire.

7. Piston selon au moins l'une des revendications précédentes 1 à 6, **caractérisé en ce qu'**une longueur de la surface cylindrique extérieure (26) du côté de la première chambre dans la direction axiale du piston est plus courte qu'une longueur de la surface cylindrique extérieure (27) du côté de la seconde chambre.

8. Moyens d'amortissement, en particulier moyens d'amortissement hydraulique comportant un piston (13) selon l'une des revendications 1 à 6, introduit à l'intérieur d'un alésage de cylindre (11) d'un tube cylindrique (10) de manière à pouvoir coulisser librement et à séparer ledit alésage de cylindre (11) en une première et une seconde chambre (14, 15), dans lesquels ledit piston (13) comprend un corps de piston (23) comportant une gorge annulaire (24) située sur sa surface extérieure (26, 27) et une bague d'étanchéité élastique (25) montée à l'intérieur de ladite gorge (24), dans lesquels ladite surface extérieure (26, 27) dudit corps de piston (23) comprend deux diamètres extérieurs différents (D1, D2) situés sur des côtés respectifs de ladite gorge (24).

9. Moyens d'amortissement selon la revendication 8, **caractérisés en ce qu'**une pression maximale de fluide produite dans ladite première chambre (14) est plus élevée que celle qui est produite dans ladite seconde chambre (15), et ladite première chambre (14) est située sur un côté dudit diamètre extérieur (D1) qui a une valeur plus faible.

10. Moyens d'amortissement selon la revendication 8 ou la revendication 9, **caractérisés en ce qu'**il est fourni un autre piston (17) qui sépare la première chambre (14) en deux chambres (18, 19) qui sont aménagées de manière à communiquer avec des amortisseurs (4, 4) de différentes suspensions (2, 2).

11. Moyens d'amortissement selon l'une des revendications 8 à 10, **caractérisés en ce que** ladite première chambre (14) est remplie d'un fluide (21) ou d'une huile (21a), et **en ce que** ladite seconde chambre (15) est remplie d'un fluide (21) ou d'un gaz (21b).
